# EUROPÄISCHE PATENTSCHRIFT

(11) **EP 0 537 483 B1**
(45) Veröffentlichungstag und Bekanntmachung des Hinweises auf die Patenterteilung: **22.11.1995**
(21) Anmeldenummer: 92115673.3
(22) Anmeldetag: 14.09.1992
(51) Int. Cl.: B60T 17/00, B01D 53/26

(54) **Lufttrockner für von einem Kompressor aufladbare Druckluftanlagen, insbesondere Druckluftbremsanlagen von Fahrzeugen**
Air dryer for air pressure installation chargeable by compressor, especially air pressure brake systems for vehicles
Sécheur d'air pour installation d'air comprimé chargeable par un compresseur, en particulier pour installation de freins à air comprimé de véhicules

(30) Priorität: 15.10.1991 DE 4134115
(43) Veröffentlichungstag der Anmeldung: 21.04.1993
(73) Patentinhaber: KNORR-BREMSE Systeme für Nutzfahrzeuge GmbH, 80809 München (DE)
(72) Erfinder: Unger, Hans, W-8044 Unterschleissheim (DE)

(56) Entgegenhaltungen:
- EP-A- 0 036 569
- EP-A- 0 405 073
- DE-U- 8 604 486
- FR-A- 2 620 949

## Beschreibung

Die Erfindung betrifft einen Lufttrockner nach dem Gattungsbegriff des Patentanspruches 1.

Bei Druckluftanlagen, auch Druckluftbremsanlagen von Fahrzeugen, insbesondere Nutzfahrzeugen, ist es allgemein bekannt, zur Geräuschdämpfung Auslässe für Druckluft mit Schalldämpfern zu versehen. Bekannt sind auch Lufttrockner (DE-OS 33 11 682), mit an einem Gehäuse integrierten Schalldämfereinrichtungen. Mit Hilfe derartiger Schalldämpfer wird das beim Öffnen des im Lufttrockner wirkenden Ablaßventils entstehende Entspannungsgeräusch gemindert. Es handelt sich hierbei um mehrstufige Drosseldämpfer, welche bauartbedingt nicht verstopfen können, wodurch ein gleichbleibender Wirkungsgrad des Lufttrockners gewährleistet ist.

Die Anforderungen an die Geräuschdämpfung sind in den letzten Jahren in zunehmendem Maße erhöht worden; teilweise bestehende und zu erwartende gesetzliche Regelungen sehen vor, daß das Ablaßgeräusch am Lufttrockner maximal 72 dBA betragen darf. So ist bei Lufttrocknern der gattungsgemäßen Art (EP-A- 405 073) bereits vorgeschlagen worden, in dem dem Ablaßventil nachgeordneten Auslaßstutzen des Gehäuses einen Schalldämpfer vorzusehen. Die Verwendung von Drosselorganen bei Lufttrocknern mit Regeneration ist zwar bekannt (DE-U-86 04 486), hierbei steht jedoch die Beeinflussung des Zeitverhaltens derartiger Anlagen im Vordergund.

Die Aufgabe der vorliegenden Erfindung besteht darin, einen Lufttrockner der gattungsgemäßen Art so auszubilden, daß den erhöhten Anforderungen nach Geräusch-dämpfung mit baulich einfachen Mitteln entsprochen werden kann.

Zur Lösung dieser Aufgabe dienen die Merkmale nach dem Kennzeichnungsteil des Patentanspruches 1.

Durch die im Verbindungskanal zwischen Druckregler und Ablaßventil befindliche Düse wird beim Schalten des Druckreglers der Druckaufbau über dem Schaltkolben des Ablaßventils zeitlich verzögert, eine als Quelle für starke Geräuschentwicklung bekannte plötzliche Expansion der am Ablaßventil anstehenden Druckluft in Verbindung mit aus dem Lufttrockner anfallenden Wasser wird vermieden. Die gleichzeitige Koppelung eines an sich bekannten integrierten Schalldämpfers mit einem an dessen Auslaß befestigten externen Schalldämpfer trägt in weiterem Maße zu einer Reduzierung des Ablaßgeräusches auf Werte unterhalb von 72 dBA bei. Die hierfür vorgesehenen baulichen Mittel sind denkbar einfach, sie bedürfen keiner besonderen Wartung. Die Düse kann zur Veränderung ihres Querschnitts von außen einstellbar ausgebildet sein.

Vorteilhafte Ausgestaltungen und Weiterbildungen sind in weiteren Patentansprüchen aufgeführt.

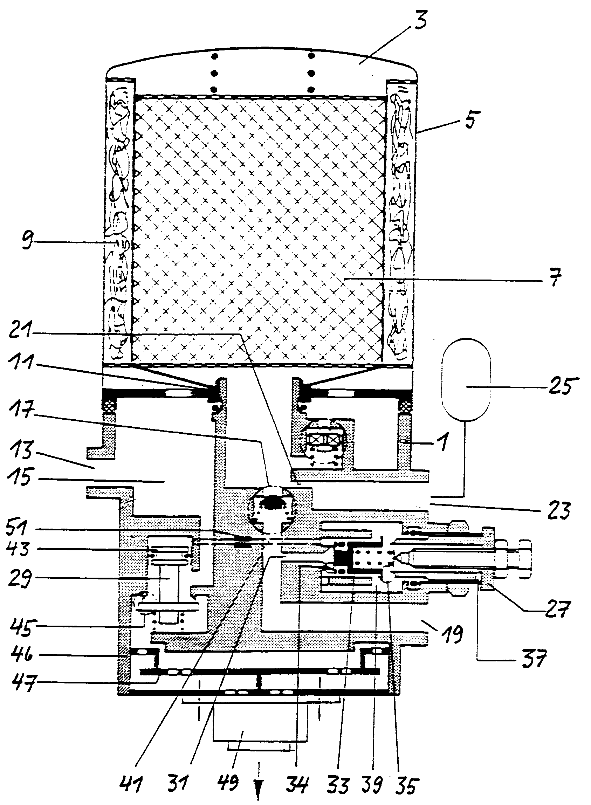

Die Erfindung ist nachfolgend anhand eines Ausführungsbeispiels unter Bezugnahme auf die einzige Zeichnung erläutert. Diese gibt in vereinfachter Schnittdarstellung einen Lufttrockner gemäß der Erfindung wieder, wobei der am integrierten Schalldämpfer befestigte externe Schalldämpfer in seinen Umrißlinien schematisch aufgezeigt ist.

Der in der Zeichnung dargestellte Lufttrockner gemäß der Erfindung dient in Druckluftanlagen, insbesondere Druckluft-Bremsanlagen von Fahrzeugen zum Reinigen und Trocknen der von einem Kompressor geförderten Luft sowie zum Regulieren des Betriebsdruckes in den Vorratsbehältern. Der Lufttrockner besteht im wesentlichen aus einem Gehäuse 1, in welchem sich Anschluß-, Steuer-, Schalt- und Ventileinrichtungen für die Lufttrocknung befinden, und aus einer Lufttrocknungspatrone 3, welche in beliebiger Weise mit dem Gehäuse 1 verbunden ist. Die Lufttrocknungspatrone 3 ist durch ein Gehäuse 5 gebildet, in welchem sich ein Trockenmittel 7 und ein das Trockenmittel umgebender Ringfilter 9 befinden. Am unteren Ende des Gehäuses 5 befindet sich ein zentrischer Anschlußstutzen 11, welcher auf das Gehäuse 1 des Lufttrockners aufgesetzt ist.

Die Trocknung der Luft erfolgt durch Adsorption in dem als Molekularsieb wirkenden Trockenmittel 7 der Trockungspatrone. Hierbei wird in der Luft enthaltener Wasserdampf an der Trockenmittelobefläche gebunden. Zur Regeneration des Trockenmittels wird jeweils nach einer Trocknungsphase ein Teil der getrockneten Luft auf atmosphärischen Druck entspannt und in entgegengesetzter Richtung durch das Trockenmittel hindurchgeleitet. Durch die Druckabsenkung sinkt der Partialdruck des Wasserdampfes in der Regenerationsluft; auf diese Weise ist die Regenerationsluft in der Lage, die im Trockenmittel enthaltene Feuchtigkeit aufzunehmen.

Der weitere Aufbau des Lufttrockners ist nachfolgend unter gleichzeitiger Beschreibung seiner Funktion erläutert :

### Lufttrocknung in der sogenannten Aufpumpphase :

Die vom (nicht dargestellten) Kompressor geförderte Luft strömt durch den Anschluß 13 in eine Kammer 15 und von dort durch den Ringfilter 9, wo sie von Verunreinigungen wie Ölkohle und Öl befreit wird. Die Luft wird außerdem im Ringfilter abgekühlt. Dadurch kondensiert bereits ein Teil des Wassers und sammelt sich in der Kammer 15, welche als sogenannte Vorentwässerungskammer wirkt. Nach Passieren des Ringfilters 9 gelangt die Luft über das granulatförmige Trockenmittel 7, in welchem die eigentliche Trocknung stattfindet, zu einem in der Zeichnung unterhalb des Anschlußstutzens 11 befindlichen Rückschlagventil 17, öffnet dieses und strömt über einen weiteren Anschluß 19 in die Vorratsbehälter (nicht dargestellt) der Bremsanlage des Fahrzeugs. Über eine Düse 21 und einen Anschluß 23 wird gleichzeitig ein kleiner Regenerationsluftbehälter 25 gefüllt.

### Regeneration in der Ablaßphase :

Wenn die Bremsanlage bis zu ihrem Abschaltdruck gefüllt ist, öffnet ein im Gehäuse 1 integrierter Druckregler 27 von an sich bekannter Wirkungsweise ein im Gehäuse 1 integriertes Ablaßventil 29. Hierbei wird über eine Bohrung 31 der Steuerkolben 33 des Druckreglers 27 mit dem Vorratsbehälterdruck beaufschlagt; bei Erreichen des eingestellten Abschaltdruckes wird der Steuerkolben 33 gemäß Zeichnung nach rechts verschoben und gibt den Einlaß 34 frei. Die Vergrößerung der druckbeaufschlagten Fläche am Steuerkolben 33 hat zur Folge, daß dieser ruckartig weiterbewegt wird und den Auslaß 35 zu einer Entlüftungsbohrung 37 verschließt. Über eine an die Kammer 39 angeschlossene Bohrung 41 beaufschlagt die Druckluft nunmehr den Schaltkolben 43 des Ablaßventils 29 und öffnet dieses. Die vom Kompressor weiterhin geförderte Luft und die im Lufttrockner enthaltene Druckluft entweicht über den Auslaß 45 und die Schalldämpfereinrichtung ins Freie, wobei angesammeltes Kondenswasser und ein großer Teil der ausgefilterten Verunreinigungen mit ausgeschieden werden.

Wenn der Vorratsbehälterdruck um die Schaltspanne des Druckreglers bis auf den Einschaltdruck abgesunken ist, wandert der federbelastete Steuerkolben 33 des Druckreglers nach links, öffnet den Auslaß 35 und schließt den Einlaß 34. Die Luft über dem Schaltkolben des Ablaßventils entweicht durch die Bohrung 41, den Auslaß 35 und die Entlüftungsbohrung 37 ins Freie. Das Ablaßventil schließt nachfolgend wieder und die nächste Trocknungsphase beginnt.

Gemäß der Erfindung ist der vorstehend beschriebene Lufttrockner mit Mitteln ausgestattet, welche zu einer weitgehenden Schalldämpfung beitragen. An einem Auslaßstutzen 46 des Gehäuses 1 ist an diesem ein Schalldämpfer 47 integriert, welcher Mittel zur Umlenkung der Luft aufweist, als auch einen Drosselspalt und Öffnungen, welche in ihrer Gesamtheit zu einer Dämpfung der zur Atmosphäre strömenden Luft beitragen. An der Unterseite des Schalldämpfers 47 ist ein externer Schalldämpfer 49 befestigt, welcher zusätzlich zu einer Schalldämpfung beiträgt und weitgehend verhindert, daß beim Ausströmen der Luft Expansionsgeräusche auftreten.

Eine weitere erfindungsgemäße Maßnahme zur Schalldämpfung des Lufttrockners sieht vor, daß sich in der Bohrung 41 eine Düse 51 befindet. Die gegenüber der Bohrung 41 einen verengten Querschnitt aufweisende Düse bewirkt, daß beim Schalten des Druckreglers 27 der Druckaufbau über dem Schaltkolben 43 des Ablaßventils 29 zeitlich verzögert erfolgt. Durch das verzögerte Öffnen des Ablaßventils wird das Ablaßgeräusch gedämpft. Da die Geräuschdämpfung auf diese Weise bereits weitgehend im Bereich des Ablaßventils stattfindet, ist die nachfolgende Expansionsschalldämpfung mit Hilfe der Schalldämpfer 47 und 49 umso wirkungsvoller, in der Gesamtheit wird eine Schalldämpfung erreicht, welche den im zunehmenden Maße verschärften Bestimmungen für lärmarme Fahrzeuge entspricht.

### Bezugszeichenliste

- 1: Gehäuse
- 3: Lufttrocknungspatrone
- 5: Gehäuse
- 7: Trockenmittel
- 9: Ringfilter
- 11: Anschlußstutzen
- 13: Anschluß
- 15: Kammer
- 17: Rückschlagventil
- 19: Anschluß
- 21: Düse
- 23: Anschluß
- 25: Regenerationsluftbehälter
- 27: Druckregler
- 29: Ablaßventil
- 31: Bohrung
- 33: Steuerkolben
- 34: Einlaß
- 35: Auslaß
- 37: Entlüftungsbohrung
- 39: Kammer
- 41: Bohrung
- 43: Schaltkolben
- 45: Auslaß
- 46: Auslaßstutzen
- 47: Schalldämpfer
- 49: Schalldämpfer
- 51: Düse

## Patentansprüche

1. Lufttrockner für von einem Kompressor aufladbare Druckluftanlagen, insbesondere Druckluftbremsanlagen von Fahrzeugen, mit einer Lufttrocknungspatrone (3) und einem mit diesem verbundenen Gehäuse (1) zur Aufnahme von Anschluß-, Steuer- und Ventileinrichtungen sowie eines im Gehäuse (1) integrierten Ablaßventils (29) zum Auslaß der vom Kompressor geförderten Luft während der Kompressor-Leerlaufphasen, unter Verwendung einer dem Ablaßventil (29) nachgeordneten, im Auslaßstutzen des Gehäuses befestigten Schalldämpfereinrichtung wobei sich eine Bohrung (41) zwischen einer den Schaltdruck zur Betätigung des Ablaßventils (29) führenden Kammer (39) des im Gehäuse (1) integrierten Druckreglers (27) und der Druckkammer eines mit dem Ablaßventil (29) verbundenen Schaltkolbens (43) erstreckt, dadurch gekennzeichnet, daß in der den Schaltdruck des Ablaßventils (29) führenden Bohrung (41) eine Düse (51) angeordnet ist, und daß die Schalldämpfereinrichtung aus einem im Auslaßstutzen (46) des Gehäuses (1) integrierten ersten Schalldämpfer (47) und einem diesem nachgeordneten und in dessen Auslaß fixierten zweiten Schalldämpfer (49) besteht.

## Claims

1. Air dryer for compressed-air installations chargeable by a compressor, in particular compressed-air brake systems of vehicles, having an air drying cartridge (3) and a housing (1) connected to it for receiving connection, control and valve devices and a discharge valve (29) integrated in the housing (1) for discharging the air supplied from the compressor during the compressor idling phases, using a silencer device connected downstream of the discharge valve (29) and secured in the outlet connection of the housing, a bore (41) extending between a chamber (39) of the pressure regulator (27) integrated in the housing (1), which conducts the switch pressure for actuating the discharge valve (29), and the pressure chamber of a switch piston (43) connected to the discharge valve (29), characterised in that a nozzle (51) is disposed in the bore (41) conducting the switch pressure of the discharge valve (29), and in that the silencer device comprises a first silencer (47) integrated in the discharge connection (46) of the housing (1), and a second silencer (49) connected downstream of the first and fixed in its discharge.

## Revendications

1. Sécheur d'air pour des installations d'air comprimé pouvant être chargées par un compresseur, notamment des installations de freinage à air comprimé de véhicules, comportant une cartouche de séchage d'air (3) et un boîtier (1), relié à ce sécheur d'air, pour loger des dispositifs de raccordement, des dispositifs de commande et des dispositifs à soupapes, ainsi qu'une soupape d'évacuation (29), intégrée dans le boîtier (1), pour évacuer l'air refoulé par le compresseur pendant les phases de marche à vide du compresseur, avec utilisation d'un dispositif d'insonorisation agence en aval de la soupape d'évacuation (29) et fixé dans la tubulure de sortie du boîtier, un perçage (41) s'étendant entre une chambre (39), conduisant la pression de commutation pour l'actionnement de la soupape d'évacuation (29), du régulateur de pression (27) intégré dans le boîtier (1), et la chambre de pression d'un piston de commutation (43) reliée à la soupape d'évacuation (29), caractérisé en ce que, dans le perçage (41) conduisant la pression de commutation de la soupape d'évacuation (29), est agencée une buse (51) et en ce que le dispositif d'insonorisation est constitué par un premier silencieux (47) intégré dans la tubulure de sortie (46) du boîtier (1), et par un second silencieux (49) agencé en aval du précédent et fixé dans la sortie de ce silencieux.
